# EUROPEAN PATENT SPECIFICATION

(11) **EP 3 569 402 B1**
(45) Date of publication and mention of the grant of the patent: **08.12.2021**
(21) Application number: 17897405.1
(22) Date of filing: 20.10.2017
(51) Int. Cl.: B32B 3/06, B32B 5/26, B32B 5/28, B29C 70/04

(54) **COMPOSITE MATERIAL AND METHOD FOR MANUFACTURING COMPOSITE MATERIAL**
VERBUNDWERKSTOFF UND VERFAHREN ZUR HERSTELLUNG VON VERBUNDWERKSTOFF
MATÉRIAU COMPOSITE ET PROCÉDÉ DE FABRICATION D'UN MATÉRIAU COMPOSITE

(30) Priority: 22.02.2017 JP 2017031108
(43) Date of publication of application: 20.11.2019
(73) Proprietor: Mitsubishi Heavy Industries, Ltd., Chiyoda-ku, Tokyo 1008332 (JP)
(72) Inventor: SHIMIZU, Takayuki, Tokyo 108-8215 (JP); MIZUNO, Tomohiro, Tokyo 108-8215 (JP); MANO, Shoya, Tokyo 108-8215 (JP)
(74) Representative: Henkel & Partner mbB
(86) International application number: PCT/JP2017/038049
(87) International publication number: WO 2018/154846

(56) References cited:
- EP-A1- 1 840 775
- EP-A1- 1 840 775
- EP-A1- 3 026 259
- WO-A1-2008/090911
- WO-A2-2006/037083
- JP-A- 2002 361 666
- JP-A- 2008 266 373
- JP-A- 2008 514 458
- JP-A- 2009 126 056
- US-A1- 2010 080 952
- US-A1- 2012 121 854
- US-A1- 2013 216 766
- US-A1- 2013 236 692
- US-A1- 2013 243 992
- US-A1- 2016 348 644
- US-A1- 2016 348 644

## Description

### Technical Field

The present invention relates to a composite material and a method for manufacturing a composite material.

### Background Art

A composite material such as carbon fiber reinforced plastic (CFRP) is used in aircraft structures and the like since it is lighter than a metallic material and have higher specific strength and specific rigidity. This composite material is formed by laminating sheets (prepregs) in which reinforcing fibers are impregnated with a thermosetting resin, and by heating and pressing the sheets to be cured. PTL 1 describes that two types of sheets having different thicknesses are laminated to form a composite material. Although such a composite material is lightweight and highly rigid, it is disadvantageously characterized in that the rigidity is low against a force in a lamination direction. Therefore, in a case where such a composite material is used, a thickness is set to be larger at a portion where stress concentrates, for example, a periphery of an opening, than at other portions in order to improve the rigidity. Composite materials comprising at least two layers each formed from a plurality of laminated composite sheets containing both reinforcing fibers and a resin are further known from PTL 2 to PTL 8, with PTL 2, PTL 3, PTL 5, PTL 6, PTL 7 and PTL 8 suggesting composite materials for use in aircraft structures.

### Citation List

### Patent Literature

[PTL 1] Japanese Patent Publication No. JP 5788556 B2; International Patent Application Publication No. WO 2006/037083 A2
[PTL 2] United States Patent Application Publication No. US 2010/0080952 A1
[PTL 3] European Patent Application Publication No. EP 1 840 775 A1
[PTL 4] United States Patent Application Publication No. US 2016/0348644 A1
[PTL 5] United States Patent Application Publication No. US 2012/0121854 A1
[PTL 6] United States Patent Application Publication No. US 2013/0216766 A1
[PTL 7] United States Patent Application Publication No. US 2013/0236692 A1
[PTL 8] United States Patent Application Publication No. US 2013/0243992 A1

### Summary of Invention

### Technical Problem

However, in a case where only the portion where stress concentrates is thicker, a surface may be steeply inclined between the portion where the thickness is increased and surrounding portions, and strength of the inclined portion may be reduced. On the other hand, strength reduction is suppressed by alleviating the inclined portion; however, areas with the increased thickness increase and thus a weight is gained. Therefore, it is required to suppress increase in weight while suppressing decrease in strength in the composite material.

The present invention solves the problems stated above, and an object of the present invention is to provide a composite material and a method for manufacturing a composite material which suppress increase in weight while suppressing decrease in strength. The invention is defined by the claims.

### Solution to Problem

In a first aspect to solve the problems stated above and to achieve the object, the present invention thus relates to a composite material as defined in claim 1. The composite material according to the present invention includes:
a first layer in which a plurality of first sheets are laminated, the first sheet being a composite containing reinforcing fibers and a resin;
a second layer provided on a partial area of a surface of the first layer, in which a plurality of second sheets are laminated, the second sheet being a composite containing reinforcing fibers and a resin and having a thickness smaller than that of the first sheet; and
a third layer which covers a surface of the second layer and the surface of the first layer and includes a third sheet, the third sheet being a composite containing reinforcing fibers and a resin,
wherein the second sheet of the second layer occupies a larger area on the area of the surface of the first layer as compared to the second sheet laminated closer to a side of the third layer, and
wherein an opening is formed in the composite material, and the second layer is provided around the opening.

In the composite material, the inclined portion is formed by the second layer in which the second sheets having a small thickness are laminated. Therefore, this composite material can improve the strength of the inclined portion, and can suppress increase in weight while suppressing decrease in strength.

In the composite material, a thickness of the second layer is preferably 10% or more and 200% or less of a thickness of the first layer. By setting the thickness of the second layer to fall within such a range, the composite material can suppress increase in weight while further appropriately suppressing decrease in strength.

In the composite material, a thickness of the second sheet is preferably 2% or more and 50% or less of a thickness of the first sheet. By setting the thickness of the second sheet to fall within such a range, the composite material can suppress increase in weight while further appropriately suppressing decrease in strength.

In the composite material, it is preferable that, in a case where the second sheet located closest to a side of the first layer is referred to as a bottom-side second sheet, and the second sheet located closest to the side of the third layer is referred to as a front-side second sheet, the second layer is configured that a length along a lamination direction is 5% or more and 20% or less of a length along a direction parallel to a surface, which is a length from an end in a direction parallel to a surface of the bottom-side second sheet to an end in a direction parallel to a surface of the front-side second sheet. By setting a taper ratio to fall within such a range, the composite material can suppress increase in weight while further appropriately suppressing decrease in strength.

In the composite material, the third sheet preferably has the same thickness as that of the first sheet. In the composite material, general portions except for a thickened portion can be fabricated in a short time by setting the third sheet covering the second sheet to have such a thickness.

In the composite material, an opening is formed in the composite material, and the second layer is provided around the opening. The composite material can appropriately suppress decrease in strength by providing the second layer around the opening where stress is likely to concentrate and increasing the thickness.

In a second aspect to solve the problems stated above and to achieve the object, the present invention relates to a method for manufacturing a composite material as defined in claim 6. The manufacturing method according to the present invention includes:
a first-layer formation step of forming a first layer by laminating a plurality of first sheet, the first sheet being a composite containing reinforcing fibers and a resin;
a second-layer formation step of forming a second layer on a partial area of a surface of the first layer by laminating a plurality of second sheets, the second sheet being a composite containing reinforcing fibers and a resin and having a thickness smaller than that of the first sheet; and
a third-layer formation step of forming a third layer by providing a third sheet so as to cover a surface of a surface of the second layer and the surface of the first layer, the third sheet being a composite containing reinforcing fibers and a resin,
wherein the second sheets are laminated in the second-layer formation step such that the second sheet of the second layer occupies a larger area on the area of the surface of the first layer as compared to the second sheet laminated closer to a side of the third layer, and
wherein an opening is formed in the composite material, and the second layer is provided around the opening.

According to this manufacturing method, it is possible to manufacture a composite material in which increase in weight is suppressed while suppressing decrease in strength.

In the method for manufacturing a composite material, the second-layer formation step preferably includes a second-sheet laminate formation step of laminating the second sheets to form a second-sheet laminate, and a second-sheet laminate arrangement step of arranging the second-sheet laminate on a partial area of the surface of the first layer, thereby forming the second layer. According to this manufacturing method, since the second-sheet laminate in which the second sheets are laminated is arranged on the first layer, it is possible to manufacture the composite material more easily.

### Advantageous Effects of Invention

According to the present invention, increase in weight can be suppressed while suppressing decrease in strength.

### Brief Description of Drawings

Fig. 1 is a schematic view of a composite material according to a present embodiment.
Fig. 2 is a schematic view of the composite material according to the present embodiment.
Fig. 3 is a schematic cross-sectional view of the composite material according to the present embodiment.
Fig. 4 is a view illustrating a method for manufacturing a composite material according to the present embodiment.
Fig. 5 is a schematic view of a model of the composite material according to Examples.
Fig. 6 is a schematic view of a composite material according to Comparative Examples.
Fig. 7 is a table summarizing analysis results of Comparative Examples and Examples.

### Description of Embodiments

Hereinafter, preferred embodiments of the present invention will be described in detail with reference to the accompanying drawings. It should be noted that the present invention is not limited to the embodiments, and in a case where there are a plurality of embodiments, those configured by combining the respective embodiments also fall within a scope of the present invention.

### (Composition of Composite Material)

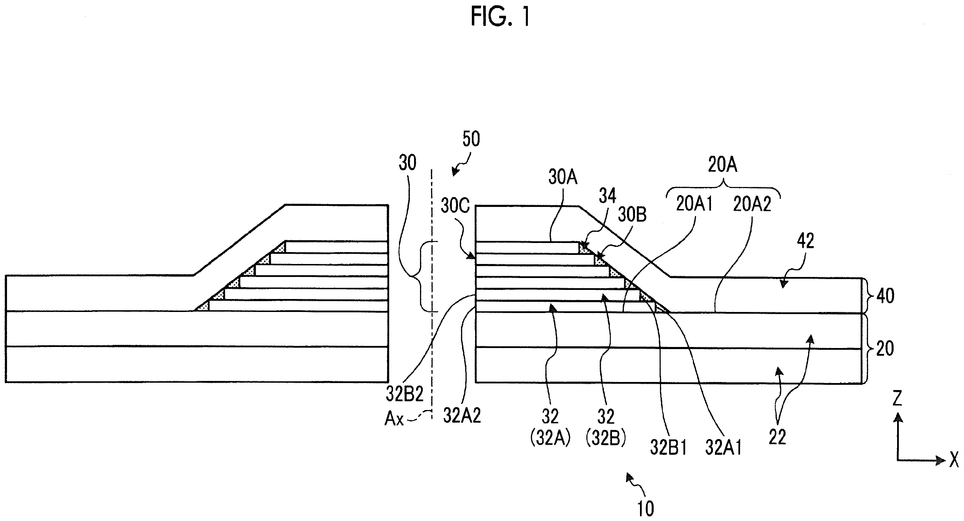

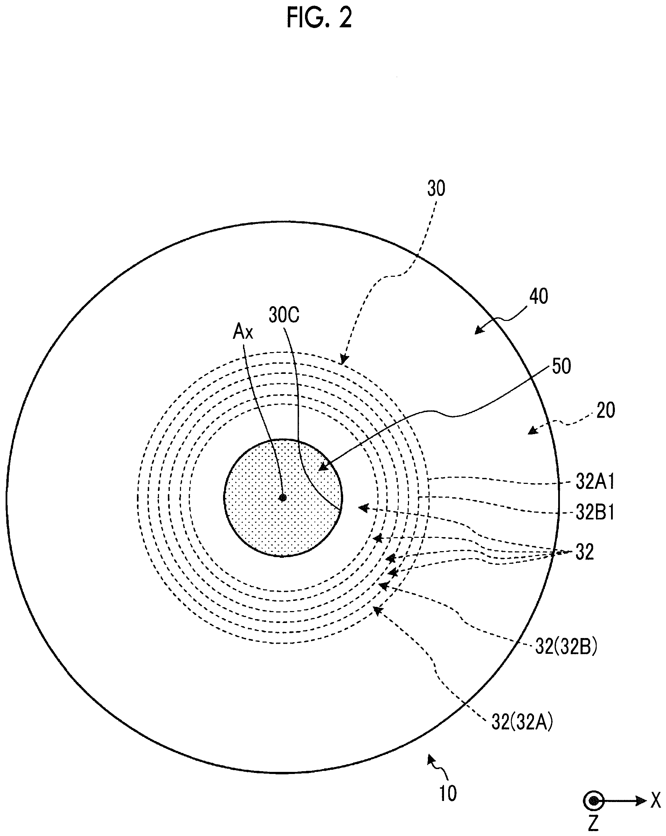

Figs. 1 and 2 are schematic views of the composite material according to the present embodiment. A composite material 10 according to the present embodiment is, for example, a member used for products such as aircrafts. Fig. 1 is a cross-sectional view of the composite material 10 and Fig. 2 is a top view of the composite material 10. As shown in Figs. 1 and 2, the composite material 10 has a first layer 20, a second layer 30, and a third layer 40, and an opening 50 is further formed therein. Although the composite material 10 is circular in an example shown in Fig. 2, a shape of the composite material 10 is not limited thereto and may be randomly selected.

As shown in Fig. 1, the first layer 20 is a laminate in which a plurality of first sheets 22 are laminated (overlapped) along a Z-direction. The first sheet 22 is a composite containing reinforcing fibers and a resin, and in particular, is the composite in which the reinforcing fibers are impregnated with the resin. The first sheet 22 is in a form of a plate, that is, in a form of a sheet. The first sheet 22 is in a form of a flat plate in the example shown in Fig. 1; however, it may be in a form of a random shape, for example, of a curved shape. In the present embodiment, the first sheet 22 is a carbon fiber reinforced plastic (CFRP) in which carbon fibers are used as the reinforcing fibers. However, the reinforcing fibers are not limited to the carbon fibers, and may be other plastic fibers, glass fibers or metal fibers. The resin is, for example, a thermosetting resin or a thermoplastic resin. The thermosetting resin is, for example, an epoxy resin. The thermoplastic resin is, for example, polyetherether ketone (PEEK), polyether ketone ketone (PEKK), polyphenylene sulfide (PPS) or the like. In addition, the resin is not limited to these resins. Other resins may be used.

In the first layer 20, two first sheets 22 are laminated in the example shown in Fig. 1; however, this number of the first sheets is merely exemplified. The number of the first sheets 22 to be laminated is randomly set depending on the product. The first layer 20 forms a surface 20A by laminating the first sheets 22. The surface 20A is a surface of the first sheet 22 laminated on an upper side in the Z-direction of the first layer 20, that is, a surface of the first sheet laminated on the uppermost side. The Z-direction is a direction in which the first sheets 22 are laminated, that is, referred to as a lamination direction. Furthermore, an X-direction is a direction orthogonal to the Z-direction, and is a direction parallel to the surface 20A. Moreover, the X-direction is a radial direction with respect to a central axis Ax of the opening 50, and the Z-direction is an axial direction along the central axis Ax.

As shown in Fig. 1, the second layer 30 is provided in an area 20A1 of the first layer 20. The area 20A1 is the partial area of surface 20A. The second layer 30 is a laminate in which a plurality of second sheets 32 are laminated (overlapped) along the Z-direction on the area 20A1. Similar to the first sheet 22, the second sheet 32 is a composite containing reinforcing fibers and a resin, and in other words, is the composite in which the reinforcing fibers are impregnated with the resin. However, a thickness of the second sheet 32, that is, a length along the Z-direction of the second sheet 32 is smaller than the thickness (a length along the Z-direction) of the first sheet 22. Materials of the reinforcing fibers and the resin of the second sheet 32 is the same as those of the first sheet 22, but may be different. In addition, although the second layer 30 has six second sheets 32 laminated in the example shown in Fig. 1; however, this number of the second sheets is merely exemplified. The number of the second sheets 32 to be laminated is randomly set depending on the product.

As shown in Figs. 1 and 2, in the second layer 30, the second sheet 32 closest to a side of the first layer 20 occupies the entire area of the area 20A1 of the first layer 20. The second sheet 32 closer to a side of the third layer 40 occupies only a part of the area 20A1. In other words, the second sheets 32 occupies a larger area on the area 20A1 as compared to the second sheet 32 laminated closer to the side of the third layer 40 in the second layer 30. That is, the area occupied by the second sheet 32 laminated on the side of the first layer 20 is larger on the area 20A1, while the area occupied by the second sheet 32 laminated closer to the side of the third layer 40 is smaller on the area 20A1. In addition, the second sheet 32 overlaps the entire surface of the second sheet 32 laminated on the side of the first layer 20.

Hereinafter, in the second layer 30, the second sheet 32 on the side of the first layer 20 is referred to as a laminated second sheet 32A, out of the two second sheets 32 in contact with each other along the Z-direction. Furthermore, the second sheet 32 on the opposite side (on the side of the third layer 40) to the first layer 20 is referred to as a laminate second sheet 32B, out of the two second sheets 32 in contact with each other along the Z-direction. In other words, the laminated second sheet 32A has a surface on which the laminate second sheet 32B is laminated, and the laminate second sheet 32B is laminated on the laminated second sheet 32A. In this case, as shown in Figs. 1 and 2, when viewed from the top, that is, viewed in the Z-direction from the side of the third layer 40, the laminated second sheet 32A is configured that a partial surface on a side of an end 32A1 is exposed from the laminate second sheet 32B. The end 32A1 is an end along the X-direction (a direction parallel to a surface) of the laminated second sheet 32A. In other words, the end 32A1 of the laminated second sheet 32A is disposed on an X-direction side, that is, a radially outer side, than an end 32B1 of the laminate second sheet 32B. Furthermore, the end 32B1 of the laminate second sheet 32B is disposed within an area of a surface of the laminated second sheet 32A, and is not exposed outside the area of the surface of the laminated second sheet 32A. The end 32B1 is an end along the X-direction (a direction parallel to a surface) of the laminate second sheet 32B.

Furthermore, in the laminated second sheet 32A and the laminate second sheet 32B, the end 32A2 and the end 32B2 are at the same position along the X-direction. In other words, a surface on the side of the end 32A2 of the laminated second sheet 32A is not exposed from the laminate second sheet 32B in top view, and overlaps the laminate second sheet 32B. The end 32A2 is an end surface on a side of the opening 50, that is, an inner peripheral surface, of the laminated second sheet 32A. Similarly, the end 32B2 is an end surface on a side of the opening 50, that is, an inner peripheral surface, of the laminate second sheet 32B.

Since the second layer 30 has the laminated second sheet 32A and the laminate second sheet 32B, which are laminated in a way stated above, it is possible to laminate the second sheets 32 in a step-like manner. That is, in the second layer 30, an end 30B on the X-direction side is formed by laminating the second sheets such that the end 32A1 and the end 32B1 are displaced in the X-direction. Therefore, the end 30B has a slope shape that is inclined with respect to the Z-direction. On the other hand, in the second layer 30, an end 30C on the side of the opening 50, that is, on an inner peripheral surface side, is formed such that the end 32A2 and the end 32B2 are kept at the same position along the X-direction. Therefore, the end 30C has a shape along the Z-direction, which is a circumferential shape.

In the example shown in Fig. 1, the second sheet 32 closest to the side of the first layer 20 is the laminated second sheet 32A, and the second sheet 32 laminated thereon is the laminate second sheet 32B. However, this is a mere example; a random second sheet 32 out of the plurality of second sheets 32 is referred to as the laminated second sheet 32A, and the second sheet 32 laminated thereon is referred to as the laminate second sheet 32B. Moreover, the second layer 30 is preferably configured that all of the second sheets 32 have a respective uniform distance along the X-direction between the end 32A1 and the end 32B1. That is, the second sheet 32 is laminated such that the ends are displaced in the X-direction and a displacement length is uniform. However, the distance along the X-direction between the end 32A1 and the end 32B1 may not be uniform for each second sheet 32, and may be different for each second sheet 32.

As shown in Fig. 1, the third layer 40 is provided to cover the surfaces of the first layer 20 and the second layer 30. In particular, the third layer 40 is provided from the surface of the second layer 30 to an area 20A2 of the first layer 20, and covers the surface of the second layer 30 and the area 20A2 of the surface 20A of the first layer 20. The area 20A2 is the partial area of the surface 20A of the first layer 20 and is an area other than the area 20A1. Furthermore, the surface of the second layer 30 is an area exposed outside in the second layer 30, and includes an area (that is, an area of a slope of a step) on a side of the end 30B of each second sheet 32 exposed outside, in addition to the surface of the second sheet 32 closest to the side of the third layer 40. A resin-rich layer 34 is formed (filled) between the third layer 40 and the area on the side of the end 30B of the second sheet 32. The resin-rich layer 34 is a layer formed of the resin contained in the second sheet 32 or the like, and does not contain the reinforcing fibers.

The third layer 40 has a third sheet 42. Similar to the first sheet 22, the third sheet 42 is a composite containing reinforcing fibers and a resin, in other words, is the composite in which the reinforcing fibers are impregnated with the resin. The third sheet 42 preferably has a thickness (a length along the Z-direction) larger than that of the second sheet 32 and has the same thickness as that of the first sheet 22. Furthermore, it is preferable that the third sheet 42 be made of the same material as that of the first sheet 22. In other words, the third layer 40 includes the first sheet 22. Furthermore, in the present embodiment, the third layer 40 includes only a single third sheet 42, but a plurality of third sheets 42 may be laminated (overlapped) along the Z-direction.

As shown in Fig. 1, the opening 50 is formed to penetrate the first layer 20, the second layer 30, and the third layer 40 along the Z-direction. That is, the second layer 30 is provided around the opening 50. Additionally, although the opening 50 is circular in the present embodiment, a shape may be randomly selected. The opening 50 is, for example, a hole for a rivet or an opening for providing a window of the aircraft. In the present embodiment, the opening 50 is opened so that a central portion of the second layer 30 is referred to as the central axis Ax; however, a position of the opening is not limited thereto and may be randomly selected.

The composite material 10 is configured as described above, of which the shape will be described in more detail below.

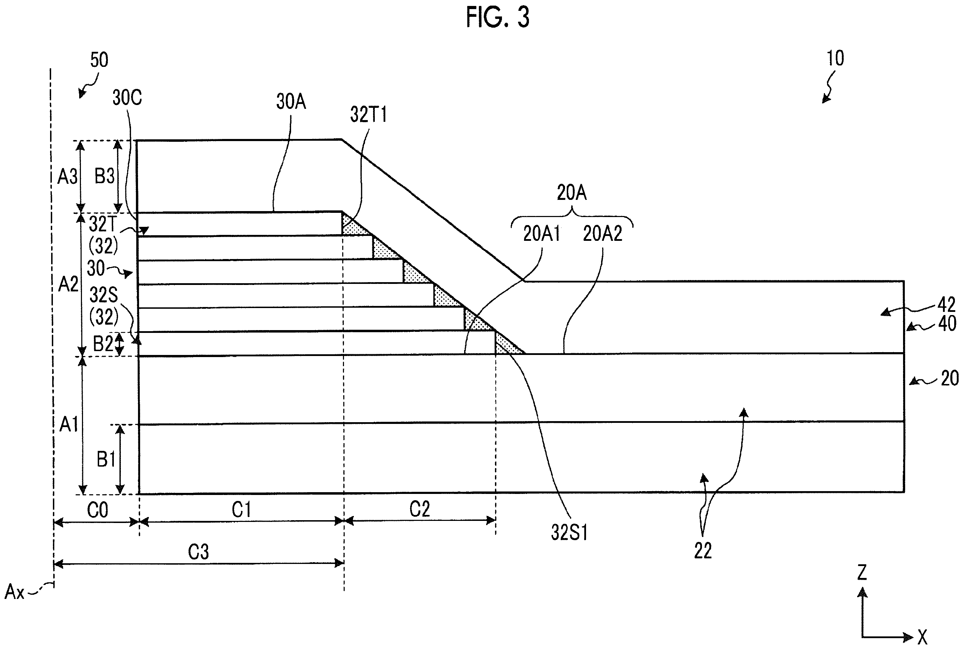

Fig. 3 is a schematic cross-sectional view of the composite material according to the present embodiment. Fig. 3 is a partial cross-sectional view of the composite material 10. As shown in Fig. 3, the thickness of the first layer 20, that is, the length along the Z-direction, is referred to as a thickness A1. Furthermore, the thickness of the second layer 30 is referred to as a thickness A2. The thickness of the third layer 40 is referred to as a thickness A3. In this case, the thickness A2 is preferably 10% or more and 200% or less of the thickness A1. Moreover, the thickness A3 is set to, for example, 0.4 mm or less; however, the thickness A3 is not limited thereto.

As shown in Fig. 3, the thickness, that is, the length along the Z-direction, of the first sheet 22 in the first layer 20 is referred to as a thickness B1. Furthermore, the thickness of the second sheet 32 in the second layer 30 is referred to as a thickness B2. Similarly, the thickness of the third sheet 42 in the third layer 40 is referred to as a thickness B3. The thickness B2 is preferably 2% or more and 50% or less of the thickness B1. Similarly, the thickness B2 is preferably 2% or more and 50% or less of the thickness B3. Moreover, it is preferable that thickness B1 and thickness B3 are respectively 0.12 mm or more and 0.8 mm or less. The thickness B2 is preferably 0.02 mm or more and 0.06 mm or less.

Furthermore, as shown in Fig. 3, the second sheet 32 located closest to the side of the first layer 20, out of the second sheets 32 of the second layer 30, is referred to as a bottom-side second sheet 32S. An end on the X-direction (a direction parallel to the surface) side of the bottom-side second sheet 32S is referred to an end 32S1. Moreover, the second sheet 32 located closest to the side of the third layer 40, out of the second sheets 32 of the second layer 30, is referred to as a front-side second sheet 32T. An end on the X-direction (a direction parallel to the surface) side of the front-side second sheet 32T is referred to an end 32T1. Furthermore, a radius of the opening 50 is set to a length C0. Moreover, a length along the X-direction from the end 30C of the second layer 30 to the end 32T1 is referred to as a length C1. Moreover, a length along the X-direction from the end 32T1 to the end 32S1 is referred to as a length C2. Moreover, a length along the X-direction from the central axis Ax of the opening 50 to the end 32T1 is referred to as a length C3. A length ratio of the lengths C1, C2, and C3 can be randomly set.

### (Method for Manufacturing Composite Material)

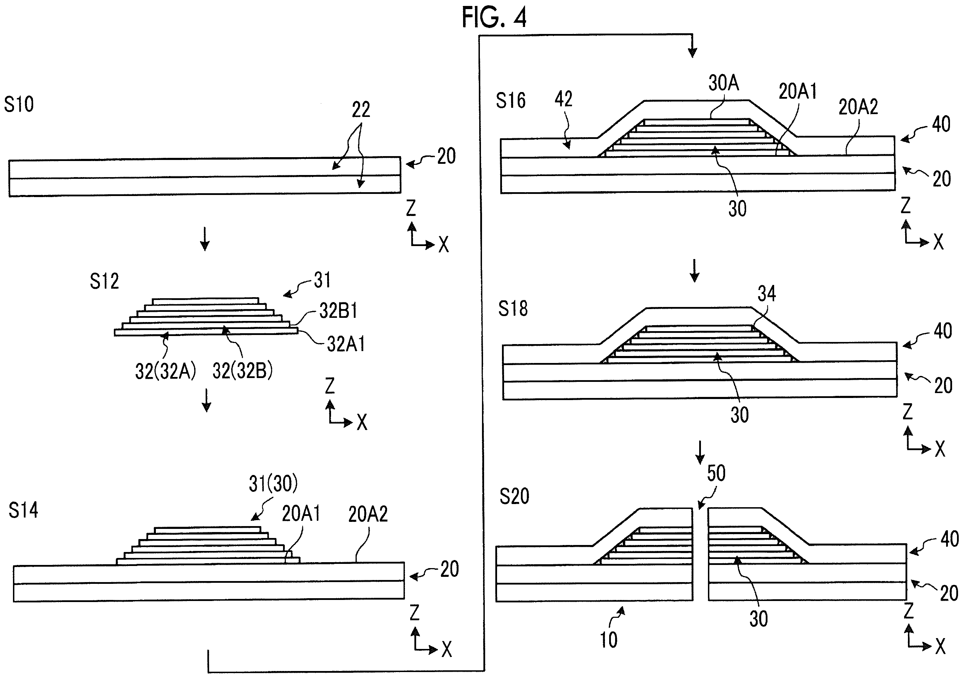

A method for manufacturing a composite material 10 will be described below. Fig. 4 is a view illustrating the method for manufacturing a composite material according to the present embodiment. As shown in Fig. 4, when manufacturing the composite material 10, the plurality of first sheets 22 are laminated along the Z-direction to form the first layer 20 (step S10; a first-layer formation step). In the first-layer formation step, the first sheet 22 is in a state in which the resin is uncured; that is, the first sheet 22 is a prepreg.

After forming the first layer 20, the plurality of second sheets 32 are laminated along the Z-direction to form the second-sheet laminate 31 (step S12; a second-sheet laminate formation step). In the second-sheet laminate formation step, the second sheets 32 are not directly laminated on the first layer 20, but are laminated at a place separated from the first layer 20. That is, the second-sheet laminate 31 is laminated at a place separated from the first layer 20. The second-sheet laminate 31 can be referred to as the second layer 30 before being arranged on the first layer 20. Therefore, in the second-sheet laminate formation step, the second sheets 32 are laminated such that the second sheet 32 occupies a larger area on the area 20A1 of the surface 20A of the first layer 20 as compared to the second sheet 32 laminated closer to the side of the third layer 40 side. In other words, when viewed from the top, that is, viewed in the Z-direction from the side of the third layer 40, the second-sheet laminate 31 is formed such that the partial surface on the side of the end 32A1 of the laminated second sheet 32A is exposed from the laminate second sheet 32B, in the second-sheet laminate formation step. In the second-sheet laminate formation step, the second sheet 32 is also in a state in which the resin is uncured; that is, the second sheet 32 is a prepreg. In addition, processes of step S10 and step S12 are not limited to be carried out in this order; the order may be randomly set.

After the second-sheet laminate 31 is formed, the second-sheet laminate 31 is arranged on the area 20A1 of the first layer 20, thereby forming the second layer 30 on the first layer 20 (step S14; a second-sheet laminate arrangement step). Step S12 and step S14 can be collectively referred to as a second-layer formation step of laminating the plurality of second sheets 32 to form the second layer 30 on the area 20A1 of the first layer 20. In addition, in the present embodiment, after forming the second-sheet laminate 31 in a different place as stated above, the second-sheet laminate 31 is arranged on the first layer 20. However, a method for forming the second layer 30 (the second-layer formation step) is not limited thereto, and the second layer 30 may be formed by sequentially laminating the second sheets 32 on the first layer 20. That is, the second layer 30 may be formed on the area 20A1 of the first layer 20 by laminating the plurality of second sheets 32 in the second-layer formation step. Subsequently, the second layer 30 is formed such that a partial surface on the side of the end 32A1 of the laminated second sheet 32A is exposed from the laminate second sheet 32B when viewed from the top, in the second-layer formation step.

After forming the second layer 30, the third sheet 42 is provided so as to cover the surface 30A of the second layer 30 and the surface of the first layer 20 to form the third layer 40 (step S16; a third-layer formation step). In the third-layer formation step, the third layer 40 is formed of the single third sheet 42, but the third layer 40 may be formed by laminating the plurality of the third sheets 42 to cover the surface 30A of the second layer 30 and the surface of the first layer 20. In the third-layer formation step, the third sheet 42 is in a state in which the resin is uncured; that is, the third sheet 42 is a prepreg.

After forming the third layer 40, the laminate of the first layer 20, the second layer 30, and the third layer 40 is pressurized and heated to form the composite material 10 (step S18). By heating the laminate, the resins of the first sheet 22, the second sheet 32, and the third sheet 42, in a state of the prepreg, are cured, and thus the composite material 10 having a predetermined shape is formed. At this time, the resin between the third layer 40 and the area on the side of the end 30B of the second sheet 32 is cured, and the resin-rich layer 34 is also formed.

After forming the composite material 10, the opening 50 is formed (step S20). In particular, the opening 50 is formed in the composite material 10, formed by applying pressure and heating, whereby the opening 50 penetrates the first layer 20, the second layer 30 and the third layer 40. Accordingly, the manufacturing process of the composite material 10 is completed. As described above, in the present embodiment, the first layer 20, the second layer 30 and the third layer 40 are laminated by laminating the sheets having no opening. The opening 50 is formed after laminating. However, the openings 50 may be formed in advance in each sheet, and the composite material 10 may be manufactured by laminating the sheets in which the openings 50 are already formed.

As described above, the composite material 10 according to the present embodiment includes the first layer 20, the second layer 30 and the third layer 40. The first layer 20 is the laminate in which the plurality of first sheets 22 are laminated, each of which is the composite containing the reinforcing fibers and the resin. The second layer 30 is the laminate provided on the area 20A1 of the first layer 20. The second layer 30 is formed by laminating the plurality of the second sheets 32, each of which is the composite containing the reinforcing fibers and the resin and has the thickness smaller than that of the first sheet 22. The area 20A1 is the partial area of the surface 20A of the first layer 20. In addition, the third layer 40 covers the surface of the second layer 30 and the surface of the first layer 20, and includes the third sheet 42 which is the composite containing the reinforcing fibers and the resin. In the second layer 30, the second sheets 32 occupies a larger area on the area 20A1 of the surface 20A of the first layer 20 as compared to the second sheet 32 laminated closer to the side of the third layer 40.

The composite material formed of the composite containing the reinforcing fiber and the resin may have a large thickness in order to improve the strength at a portion where stress concentrates. Therefore, the composite material is provided with a thickened portion where the thickness is increased and normal thick portions where the thickness is not increased. Furthermore, an inclined portion which is inclined to change the thickness from the thickened portion to the normal thick portions is provided between the thickened portion and the normal thick portions. In such a composite material, in a case where inclination of the inclined portion is set to be steep, stress is likely to concentrate, and the strength may be reduced. In particular, the strength is reduced in the area formed only with resin (the resin-rich layer 34 in Fig. 1) because the reinforcing fibers are not contained, and breakage due to stress concentration is highly likely to occur. On the other hand, in a case where the inclination of the inclined portion is set to be gentle, the area where the thickness is increased becomes large, and the weight is largely increased by the increasing amount of the thickness. Therefore, such a composite material is required to suppress increase in weight by setting the inclination of the inclined portion to be as steep as possible, while suppressing decrease in strength.

To solve such a problem, the composite material 10 according to the present embodiment forms the inclined portion by the second layer 30. The second layer 30 is configured by laminating the second sheets 32, each of which has the thickness smaller than that of the first sheet 22. In the second layer 30, the area occupied on the area 20A1 by the second sheet 32 is larger than the area occupied on the area 20A1 by the second sheet 32 laminated closer to the side of the third layer 40. Therefore, the composite material 10 reduces a space filled with the resin-rich layer 34 having a lower strength as compared to a case where, for example, the first sheets 22 are laminated to form the inclined portion, thereby increasing the second sheets 32, that is, a space with the reinforcing fibers. Therefore, the composite material 10 according to the present embodiment can improve the strength of the inclined portion. Since the composite material 10 according to the present embodiment improves the strength of the inclined portion, even in a case where the inclination of the inclined portion is set to be steep, it is possible to maintain the strength with respect to stress concentration. Accordingly, increase in weight can be suppressed by setting the inclination to be steep. Therefore, the composite material 10 according to the present embodiment can suppress increase in weight while suppressing decrease in strength.

The thickness A2 of the second layer 30 is preferably 10% or more and 200% or less of the thickness A1 of the first layer 20. The composite material 10 according to the present embodiment can suppress increase in weight while further appropriately suppressing decrease in strength, by setting the thickness of the second layer 30 to fall within such a range.

The thickness B2 of the second sheet 32 is preferably 2% or more and 50% or less of the thickness B1 of the first sheet 22. The composite material 10 according to the present embodiment can suppress increase in weight while further appropriately suppressing decrease in strength, by setting the thickness of the second sheet 32 to fall within such a range.

Furthermore, the second sheet 32 located closest to the side of the first layer 20 is referred to as the bottom-side second sheet 32S, and the second sheet 32 located closest to the side of the third layer 40 is referred to as the front-side second sheet 32T. In this case, the thickness A2, the length along the Z-direction, of the second layer 30 is preferably 5% or more and 20% or less of the length C2. The length C2 is the length along the direction parallel to the surface from the end 32S1 in the direction parallel to the surface of the bottom-side second sheet 32S to the end 32T1 in the direction parallel to the surface of the front-side second sheet 32T. The composite material 10 according to the present embodiment can suppress increase in weight while further appropriately suppressing decrease in strength, by setting a ratio of the length of the thickness A2 to the length C2, that is, the taper ratio, to fall within such a range.

The third sheet 42 preferably has the same thickness as that of the first sheet 22. The composite material 10 according to the present embodiment has the third sheet 42 covering the second sheet 32 with such a thickness, so that the general portions (portions where the second sheets 32 are not laminated) except for the thickened portion (a portion where the second sheets 32 are laminated) can be fabricated in a short time.

Furthermore, the opening 50 (which is an aperture) is formed in the composite material 10, and the second layer 30 is provided around the opening 50. The stress is likely to concentrate around the opening. The composite material 10 can appropriately suppress decrease in strength by providing the second layer 30 around the opening 50 where stress is likely to concentrate to increase the thickness. It is preferable that the second layer 30 be provided at a place where stress concentrates, other than the periphery of the opening 50.

Moreover, the method for manufacturing the composite material 10 according to the present embodiment includes the first-layer formation step, the second-layer formation step, and the third-layer formation step. The first-layer formation step is that the first layer 20 is formed by laminating the plurality of first sheets 22, each of which is the composite containing the reinforcing fibers and the resin. The second-layer formation step is that the second layer 30 is formed on the area 20A1 of the first layer 20, by laminating the plurality of second sheets 32, each of which has the thickness smaller than that of the first sheet 22. The third-layer formation step is that the third layer 40 is formed by providing the third sheet 42 to cover the surface of the second layer 30 and the surface of the first layer 20, thereby forming the third layer 40. In the second-layer formation step, the second sheets 32 are laminated such that the second sheets 32 occupies a larger area on the area 20A1 of the surface 20A of the first layer 20 as compared to the second sheet 32 laminated closer to the side of the third layer 40. According to this manufacturing method, it is possible to manufacture the composite material 10 in which increase in weight is suppressed while suppressing decrease in strength.

The second-layer formation step includes the second-sheet laminate formation step of laminating the second sheets 32 to form the second-sheet laminate 31, and the second-sheet laminate arrangement step of arranging the second-sheet laminate 31 on the area 20A1 of the first layer 20 to form forming the second layer 30. According to this manufacturing method, since the second-sheet laminate 31 in which the second sheets 32 having different thicknesses are laminated is arranged on the first layer 20, the composite material 10 can be manufactured more easily.

### (Example)

Examples of the present invention will be described below. In the present example, FEM (Finite Element Method) analysis was carried out on a model of a composite material 10X according to Comparative Example and the composite material 10 according to the present embodiment.

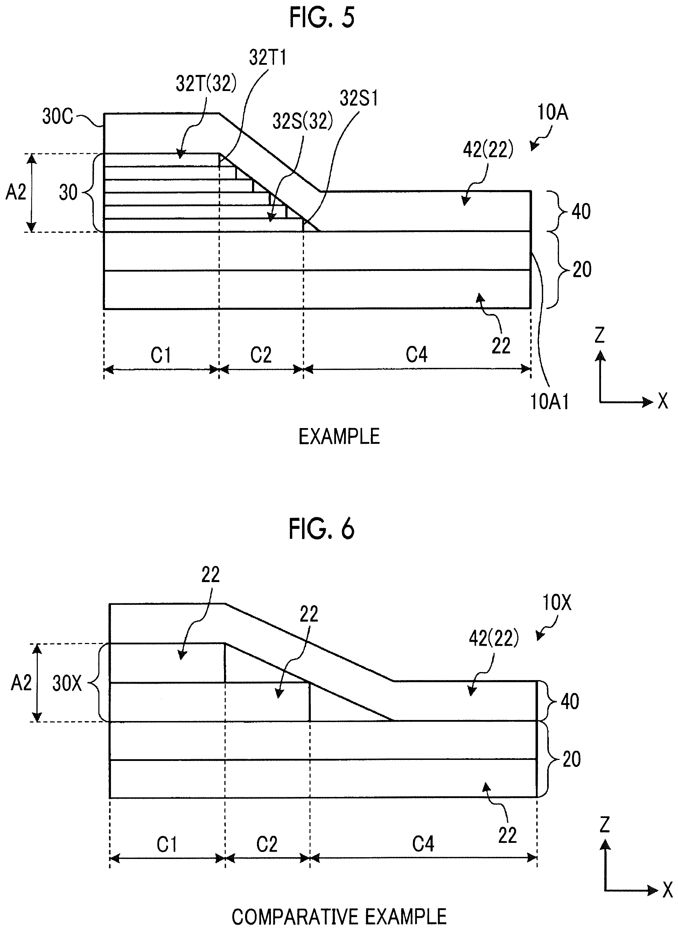

Fig. 5 is a schematic view of a model of the composite material according to Examples. Fig. 6 is a schematic view of the composite material according to Comparative Examples. As shown in Fig. 5, a model 10A of the composite material according to Examples has the first layer 20, the second layer 30, and the third layer 40, as in the embodiment stated above. The third layer 40 of the model 10A includes, as the third sheet 42, a sheet having the same thickness as that of the first layer 20, that is, the first sheet 22. Here, a length along the X-direction from the end 32S1 to an end 10A1 is referred to as a length C4. The end 10A1 is an end on the X-direction side of the model 10A. The analysis of Examples was carried out on Examples 1 and 2 in which the dimensions of the model 10A were changed. In Example 1, the length C1 is 40 mm, the length C2 is 32 mm, the length C4 is 20 mm, and the thickness A2 is 1.6 mm. Example 2 has the same dimensions as those of Example 1 except that the length C2 is 8 mm. That is, in Example 1, a ratio of the thickness A2 to the length C2 is 1:20, and in Example 2, the ratio is 1: 5.

Furthermore, as shown in Fig. 6, a model 10X of the composite material according to Comparative Examples includes the first layer 20, a second layer 30X, and the third layer 40. The second layer 30X of the model 10X is a laminate of the first sheets 22. That is, in the model 10X, a thickness of each sheet of the second layer is larger than that of the model 10A. The analysis of Comparative Examples was also carried out on Comparative Examples 1 and 2 in which the dimensions of the model 10X were changed. In Comparative Example 1, the length C1 is 40 mm, the length C2 is 32 mm, the length C4 is 20 mm, and the thickness A2 is 1.6 mm. Furthermore, Comparative Example 2 has the same dimensions as those of Comparative Example 1 except that the length C2 is 8 mm. That is, Comparative Examples 1 and 2 have the same dimensions as those of Examples 1 and 2 except for the thickness of each sheet of the second layer 30X.

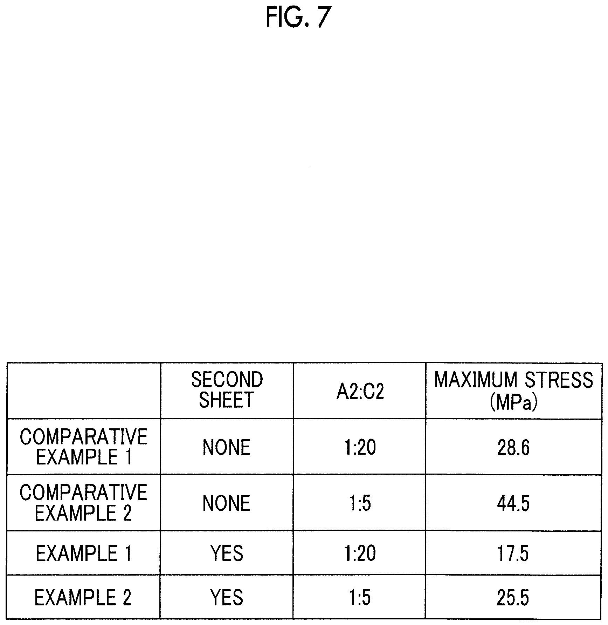

Such models were subjected to the FEM analysis in which a force (100 N) in a direction opposite to the X-direction was applied to the end 30C while being restrained at a predetermined position. Fig. 7 is a table summarizing analysis results of Comparative Examples and Examples. As shown in Fig. 7, in Comparative Example 1 (with the taper ratio of 1:20), the maximum stress (von Mises stress) generated was 28.6 MPa. Moreover, in Comparative Example 2 (with the taper ratio of 1: 5), the maximum stress was 44.5 MPa. Moreover, in Example 1 (with the taper ratio of 1:20), the maximum stress was 17.5 MPa. In Example 2 (with the taper ratio of 1:5), the maximum stress was 25.5 MPa.

According to the analysis results, it has now been apparently found that, in Comparative Examples in which the thickness of each sheet of the second layer 30X is larger, the maximum stress increases to 44.5 MPa when the inclined portion is reduced until the taper ratio is 1:5. On the other hand, in Examples in which the thickness of each sheet of the second layer 30 is smaller, the maximum stress increases up to 25.5 MPa even if the inclined portion is reduced until the taper ratio is 1:5, which is less than that of Comparative Example 1. That is, according to the present example, when the second layer 30 is provided as in the present embodiment, it has now been apparently found that the strength can be maintained even if the inclined portion is reduced until the taper ratio is 1:5.

As mentioned above, the embodiments of this invention were described; however, the embodiments are not limited to the embodiments stated in the detailed description. Furthermore, the components stated above encompass various modifications, adaptations, variations or equivalents easily conceived by those skilled in the art. Furthermore, the components stated above can be combined as appropriate. Furthermore, various omissions, substitutions, or modifications of the components can be made without departing from the scope of the embodiments described above.

### Reference Signs List

- 10:: composite material
- 20:: first layer
- 22:: first sheet
- 30:: second layer
- 32:: second sheet
- 32A:: laminated second sheet
- 32B:: laminate second sheet
- 32A1:: end
- 40:: third layer
- 42:: third sheet
- 50:: opening

## Claims

1. A composite material (10) comprising:
a first layer (20) in which a plurality of first sheets (22) are laminated, the first sheet (22) being a composite containing reinforcing fibers and a resin;
a second layer (30) provided on a partial area (20A1) of a surface (20A) of the first layer (20), in which a plurality of second sheets (32) are laminated, the second sheet (32) being a composite containing reinforcing fibers and a resin and having a thickness (B2) smaller than that of the first sheet (22); and
a third layer (40) which covers a surface (30A) of the second layer (30) and the surface (20A) of the first layer (20) and includes a third sheet (42), the third sheet (42) being a composite containing reinforcing fibers and a resin,
wherein the second sheet (32A) of the second layer (30) occupies a larger area on the area (20A1) of the surface (20A) of the first layer (20) as compared to the second sheet (32B) laminated closer to a side of the third layer (40), and
wherein an opening (50) is formed in the composite material (10), and the second layer (30) is provided around the opening (50).

2. The composite material (10) according to claim 1, wherein a thickness (A2) of the second layer (30) is 10% or more and 200% or less of a thickness (A1) of the first layer (20) .

3. The composite material (10) according to claim 1 or 2, wherein a thickness (B2) of the second sheet (32) is 2% or more and 50% or less of a thickness (B1) of the first sheet (22) .

4. The composite material (10) according to any one of claims 1 to 3, wherein, in a case where the second sheet (32) located closest to a side of the first layer (20) is referred to as a bottom-side second sheet (32S), and the second sheet (32) located closest to the side of the third layer (40) is referred to as a front-side second sheet (32T), the second layer (30) is configured that a length along a lamination direction is 5% or more and 20% or less of a length (C2) along a direction parallel to a surface, which is a length (C2) from an end (32S1) in a direction parallel to a surface of the bottom-side second sheet (32S) to an end (32T1) in a direction parallel to a surface of the front-side second sheet (32T).

5. The composite material (10) according to any one of claims 1 to 4, wherein the third sheet (42) has the same thickness (B3) as that of the first sheet (22).

6. A method for manufacturing a composite material (10), comprising:
a first-layer formation step (S10) of forming a first layer (20) by laminating a plurality of first sheets (22), the first sheet (22) being a composite containing reinforcing fibers and a resin;
a second-layer formation step (S12, S14) of forming a second layer (30) on a partial area (20A1) of a surface (20A) of the first layer (20) by laminating a plurality of second sheets (32), the second sheet (32) being a composite containing reinforcing fibers and a resin and having a thickness (B2) smaller than that of the first sheet (22); and
a third-layer formation step (S16) of forming a third layer (40) by providing a third sheet (42) so as to cover a surface (30A) of the second layer (30) and the surface (20A) of the first layer (20), the third sheet (42) being a composite containing reinforcing fibers and a resin,
wherein the second sheets (32) are laminated in the second-layer formation (S12) step such that the second sheet (32A) of the second layer (30) occupies a larger area on the area (20A1) of the surface (20A) of the first layer (20) as compared to the second sheet (32B) laminated closer to a side of the third layer (40), and
wherein an opening (50) is formed in the composite material (10), and the second layer (30) is provided around the opening (50).

7. The method for manufacturing a composite material (10) according to claim 6, wherein the second-layer formation step (S12, S14) includes:
a second-sheet laminate formation step (S12) of laminating the second sheets (32) to form a second-sheet laminate, and
a second-sheet laminate arrangement step (S14) of arranging the second-sheet laminate on a partial area (20A1) of the surface (20A) of the first layer (20), thereby forming the second layer (30).

## Patentansprüche

1. Verbundmaterial (10), umfassend:
eine erste Schicht (20), in welcher eine Vielzahl von ersten Lagen (22) laminiert sind, wobei es sich bei der ersten Lage (22) um einen Verstärkungsfasern und ein Harz enthaltenden Verbundwerkstoff handelt;
eine zweite Schicht (30), welche auf einem Teilbereich (20A1) einer Oberfläche (20A) der ersten Schicht (20) bereitgestellt ist und in welcher eine Vielzahl von zweiten Lagen (32) laminiert sind, wobei es sich bei der zweiten Lage (32) um einen Verstärkungsfasern und ein Harz enthaltenden Verbundwerkstoff handelt und die zweite Lage (32) eine Dicke (B2) aufweist, welche geringer ist als jene der ersten Lage (22); und
eine dritte Schicht (40), welche eine Oberfläche (30A) der zweiten Schicht (30) und die Oberfläche (20A) der ersten Schicht (20) bedeckt und eine dritte Lage (42) umfasst, wobei es sich bei der dritten Lage (42) um einen Verstärkungsfasern und ein Harz enthaltenden Verbundwerkstoff handelt,
wobei die zweite Lage (32A) der zweiten Schicht (30) einen größeren Bereich auf dem Bereich (20A1) der Oberfläche (20A) der ersten Schicht (20) einnimmt als die näher an einer Seite der dritten Schicht (40) laminierte zweite Lage (32B), und
wobei eine Öffnung (50) in dem Verbundmaterial (10) ausgebildet ist und die zweite Schicht (30) um die Öffnung (50) herum bereitgestellt ist.

2. Verbundmaterial (10) gemäß Anspruch 1, wobei die Dicke (A2) der zweiten Schicht (30) 10% oder mehr und 200% oder weniger der Dicke (A1) der ersten Schicht (20) beträgt.

3. Verbundmaterial (10) gemäß Anspruch 1 oder 2, wobei die Dicke (B2) der zweiten Lage (32) 2% oder mehr und 50% oder weniger der Dicke (B1) der ersten Lage (22) beträgt.

4. Verbundmaterial (10) gemäß einem der Ansprüche 1 bis 3, wobei in einem Fall, in welchem die einer Seite der ersten Schicht (20) nächstgelegene zweite Lage (32) als unterseitige zweite Lage (32S) bezeichnet wird und die der Seite der dritten Schicht (40) nächstgelegene zweite Lage (32) als vorderseitige zweite Lage (32T) bezeichnet wird, die zweite Schicht (30) derart konfiguriert ist, dass eine Länge entlang einer Laminierungsrichtung 5% oder mehr und 20% oder weniger einer Länge (C2) entlang einer parallel zu einer Oberfläche verlaufenden Richtung beträgt, wobei sich um eine Länge (C2) von einem Ende (32S1) in einer parallel zu einer Oberfläche der unterseitigen zweiten Schicht (32S) verlaufenden Richtung zu einem Ende (32T1) in einer parallel zu einer Oberfläche der vorderseitigen zweiten Schicht (32T) verlaufenden Richtung handelt.

5. Verbundmaterial (10) gemäß einem der Ansprüche 1 bis 4, wobei die dritte Lage (42) eine Dicke (B3) aufweist, welche gleich groß ist wie jene der ersten Lage (22).

6. Verfahren zur Herstellung eines Verbundmaterials (10), umfassend:
einen Erstschicht-Bildungsschritt (S10) in Form des Ausbildens einer ersten Schicht (20) durch Laminieren einer Vielzahl von ersten Lagen (22), wobei es sich bei der ersten Lage (22) um einen Verstärkungsfasern und ein Harz enthaltenden Verbundwerkstoff handelt;
einen Zweitschicht-Bildungsschritt (S12, S14) in Form des Ausbildens einer zweiten Schicht (30) auf einem Teilbereich (20A1) einer Oberfläche (20A) der ersten Schicht (20) durch Laminieren einer Vielzahl von zweiten Lagen (32), wobei es sich bei der zweiten Lage (32) um einen Verstärkungsfasern und ein Harz enthaltenden Verbundwerkstoff handelt und die zweite Lage (32) eine Dicke (B2) aufweist, welche geringer ist als jene der ersten Lage (22); und
einen Drittschicht-Bildungsschritt (S16) in Form des Ausbildens einer dritten Schicht (40) durch Bereitstellen einer dritten Lage (42) in einer Art und Weise, dass diese eine Oberfläche (30A) der zweiten Schicht (30) und die Oberfläche (20A) der ersten Schicht (20) bedeckt, wobei es sich bei der dritten Lage (42) um einen Verstärkungsfasern und ein Harz enthaltenden Verbundwerkstoff handelt,
wobei die zweiten Lagen (32) im Rahmen des Zweitschicht-Bildungsschritts (S12) derart laminiert werden, dass die zweite Lage (32A) der zweiten Schicht (30) einen größeren Bereich auf dem Bereich (20A1) der Oberfläche (20A) der ersten Schicht (20) einnimmt als die näher an einer Seite der dritten Schicht (40) laminierte zweite Lage (32B), und
wobei eine Öffnung (50) in dem Verbundmaterial (10) ausgebildet ist und die zweite Schicht (30) um die Öffnung (50) herum bereitgestellt ist.

7. Verfahren zur Herstellung eines Verbundmaterials (10) gemäß Anspruch 6, wobei der Zweitschicht-Bildungsschritt (S12, S14) umfasst:
einen Zweitlagenlaminat-Bildungsschritt (S12) in Form des Laminierens der zweiten Lagen (32) unter Ausbildung eines Zweitlagenlaminats, und
einen Zweitlagenlaminat-Anordnungsschritt (S14) in Form des Anordnens des Zweitlagenlaminats auf einem Teilbereich (20A1) der Oberfläche (20A) der ersten Schicht (20), wodurch die zweite Schicht (30) ausgebildet wird.

## Revendications

1. Matériau composite (10) comprenant :
une première couche (20) dans laquelle une pluralité de premières feuilles (22) sont stratifiées, la première feuille (22) étant un composite contenant des fibres de renforcement et une résine ;
une deuxième couche (30) fournie sur une zone partielle (20A1) d'une surface (20A) de la première couche (20), dans laquelle une pluralité de deuxièmes feuilles (32) sont stratifiées, la deuxième feuille (32) étant un composite contenant des fibres de renforcement et une résine et ayant une épaisseur (B2) plus petite que celle de la première feuille (22) ; et
une troisième couche (40) qui couvre une surface (30A) de la deuxième couche (30) et la surface (20A) de la première couche (20) et comporte une troisième feuille (42), la troisième feuille (42) étant un composite contenant des fibres de renforcement et une résine,
dans lequel la deuxième feuille (32A) de la deuxième couche (30) occupe une zone plus grande sur la zone (20A1) de la surface (20A) de la première couche (20) par rapport à la deuxième feuille (32B) stratifiée plus proche d'un côté de la troisième couche (40), et
dans lequel une ouverture (50) est formée dans le matériau composite (10), et la deuxième couche (30) est fournie autour de l'ouverture (50).

2. Matériau composite (10) selon la revendication 1, dans lequel une épaisseur (A2) de la deuxième couche (30) est 10 % ou plus et 200 % ou moins d'une épaisseur (A1) de la première couche (20).

3. Matériau composite (10) selon la revendication 1 ou 2, dans lequel une épaisseur (B2) de la deuxième feuille (32) est 2 % ou plus et 50 % ou moins d'une épaisseur (B1) de la première feuille (22).

4. Matériau composite (10) selon l'une quelconque des revendications 1 à 3, dans lequel, dans un cas où la deuxième feuille (32) située au plus près d'un côté de la première couche (20) est désignée comme une deuxième feuille côté inférieur (32S), et la deuxième feuille (32) située au plus près du côté de la troisième couche (40) est désignée comme une deuxième feuille côté avant (32T), la deuxième couche (30) est configurée de sorte qu'une longueur le long d'une direction de stratification soit 5 % ou plus et 20 % ou moins d'une longueur (C2) le long d'une direction parallèle à une surface, qui est une longueur (C2) depuis une extrémité (32S1) dans une direction parallèle à une surface de la deuxième feuille côté inférieur (32S) jusqu'à une extrémité (32T1) dans une direction parallèle à une surface de la deuxième feuille côté avant (32T).

5. Matériau composite (10) selon l'une quelconque des revendications 1 à 4, dans lequel la troisième feuille (42) a la même épaisseur (B3) que celle de la première feuille (22).

6. Procédé pour fabriquer un matériau composite (10), comprenant :
une étape de formation de première couche (S10) consistant à former une première couche (20) en stratifiant une pluralité de première feuilles (22), la première feuille (22) étant un composite contenant des fibres de renforcement et une résine ;
une étape de formation de deuxième couche (S12, S14) consistant à former une deuxième couche (30) sur une zone partielle (20A1) d'une surface (20A) de la première couche (20) en stratifiant une pluralité de deuxièmes feuilles (32), la deuxième feuille (32) étant un composite contenant des fibres de renforcement et une résine et ayant une épaisseur (B2) plus petite que celle de la première feuille (22) ; et
une étape de formation de troisième couche (S16) consistant à former une troisième couche (40) en fournissant une troisième feuille (42) de manière à couvrir une surface (30A) de la deuxième couche (30) et la surface (20A) de la première couche (20), la troisième feuille (42) étant un composite contenant des fibres de renforcement et une résine,
dans lequel les deuxièmes feuilles (32) sont stratifiées dans l'étape de formation de deuxième couche (S12) de sorte que la deuxième feuille (32A) de la deuxième couche (30) occupe une zone plus grande sur la zone (20A1) de la surface (20A) de la première couche (20) par rapport à la deuxième feuille (32B) stratifiée plus proche d'un côté de la troisième couche (40), et
dans lequel une ouverture (50) est formée dans le matériau composite (10), et la deuxième couche (30) est fournie autour de l'ouverture (50).

7. Procédé pour fabriquer un matériau composite (10) selon la revendication 6, dans lequel l'étape de formation de deuxième couche (S12, S14) comporte :
une étape de formation de deuxième stratifié (S12) consistant à stratifier les deuxièmes feuilles (32) pour former un deuxième stratifié, et
une étape d'agencement de deuxième stratifié (S14) consistant à agencer le deuxième stratifié sur une zone partielle (20A1) de la surface (20A) de la première couche (20), formant ainsi la deuxième couche (30).
